# EUROPEAN PATENT SPECIFICATION

(11) **EP 2 162 338 B1**
(45) Date of publication and mention of the grant of the patent: **13.03.2013**
(21) Application number: 08760313.0
(22) Date of filing: 30.05.2008
(51) Int. Cl.: B61B 12/02, F16H 55/50

(54) **TRANSPORTATION SYSTEM CABLE ROLLER**
KABELROLLE FÜR EIN TRANSPORTSYSTEM
ROULEAU DE CÂBLE DE SYSTÈME DE TRANSPORT

(30) Priority: 01.06.2007 IT MI20071128
(43) Date of publication of application: 17.03.2010
(73) Proprietor: Rolic Invest S.ar.l., 1724 Luxembourg (LU)
(72) Inventor: WIESER, Hartmut, I-39040 Racines (IT)
(74) Representative: Eccetto, Mauro
(86) International application number: PCT/EP2008/056726
(87) International publication number: WO 2008/145748

(56) References cited:
- EP-B- 1 277 637
- DE-A1- 3 131 433
- DE-U1- 20 118 573

## Description

### TECHNICAL FIELD

The present invention relates to a transportation system cable roller.

More specifically, the present invention relates to a transportation system cable roller comprising an annular body, which rotates about an axis of rotation and has a central hole, and an outer surface having at least one circumferential groove; a cable supporting ring made of hard, substantially elastically undeformable material and located about the annular body; at least one lateral disk located about the annular body; and an elastic lock ring housed in the circumferential groove and contacting the lateral disk to prevent axial movement of the lateral disk with respect to the annular body.

### BACKGROUND ART

The type of roller described above is extremely simple to assemble, but fails to provide for sufficient grip on the cable supporting ring.

One solution to the above problem is described in Patent EP 1,277,637 B1, which describes a roller of the above type, in which a lateral disk or rubber ring is interposed between the lateral disk and the supporting ring. This solution has the advantage of compensating for any clearance, ensuring sufficient grip, and preventing loose connection of the lateral disk and the supporting ring.

The solution described in Patent EP 1,277,637 B1, however, has the drawback of requiring replacement of the disks and rubber rings, which, because of the varying temperatures and severe climatic conditions in general in which they operate, are subject to rapid wear. Consequently, the type of roller described in Patent EP 1,277,637 B1 calls for frequent maintenance to replace the worn disks or rubber rings.

Document DE 20 118 573 U1 discloses a toothed wheel for a chain where the toothed wheel is provided elastic lateral disc for guiding the chain.

### DISCLOSURE OF INVENTION

It is an object of the present invention to provide a transportation system cable roller of the type described above, designed to eliminate the drawbacks of the known art, and which, in particular, is cheap to produce, while at the same time being of long working life.

According to the present invention, there is provided a cable roller of a cable transportation system. The roller comprises an annular body, which rotates about an axis of rotation and has a central hole, and an outer surface having at least one circumferential groove; a cable supporting ring made of hard, substantially elastically undeformable material and fitted to the annular body to slide in directions parallel to the axis of rotation; two lateral disks located about the annular body to lock the supporting ring axially; and at least one elastic lock ring housed in the circumferential groove and contacting a lateral disk to prevent axial movement of the lateral disk with respect to the annular body; the roller being characterized in that at least one of the lateral disks comprises an inner portion; an outer portion; and an intermediate portion elastically deformable in said directions to permit relative movement between the outer portion and the inner portion.

The roller according to the present invention needs no auxiliary elastic members, comprises a relatively small number of component parts, and combines easy, slack-free assembly with an extremely long working life.

### BRIEF DESCRIPTION OF THE DRAWINGS

A number of non-limiting embodiments of the present invention will be described by way of example with reference to the accompanying drawings, in which:
Figure 1 shows a section, with parts removed for clarity, of a cable roller in accordance with the present invention;
Figure 2 shows a section, with parts removed for clarity, of a cable roller in accordance with a first variation of the present invention;
Figure 3 shows a section, with parts removed for clarity, of a cable roller in accordance with a second variation of the present invention.

### BEST DIODE FOR CARRYING OUT THE INVENTION

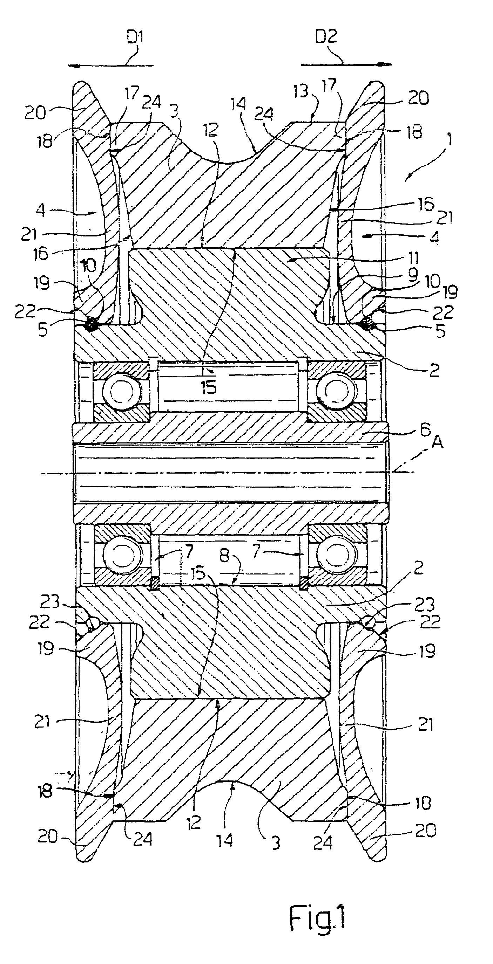

With reference to Figure 1, number 1 indicates a cable roller of a transportation system not shown in the attached drawings.

Roller 1 comprises an annular body 2; a supporting ring 3 fitted about annular body 2; two annular lateral disks 4 located about annular body 2, on opposite sides of supporting ring 3; and two elastic lock rings 5 for preventing axial movement of lateral disks 4 with respect to annular body 2.

Roller 1 is fitted about a hub 6 by means of two bearings 7, and rotates about an axis of rotation A.

Annular body 2 has an inner surface 8; an outer surface 9, along which are formed two lateral circumferential grooves 10; and an annular projection 11 located between the two circumferential grooves 10 and having a cylindrical face 12.

Supporting ring 3 is made of hard, substantially elastically undeformable material, and is fitted in sliding manner to annular body 2. In the example shown, supporting ring 3 is fitted in sliding manner to annular body 2 along cylindrical face 12 of annular projection 11. Supporting ring 3 has an outer face 13, in which is formed an annular groove 14 housing the cable (not shown in the drawings); an inner cylindrical face 15 facing cylindrical face 12; two lateral faces 16 converging towards axis of rotation A; and two lateral projections 17, each defined laterally by a face 18 contacting a respective lateral disk 4.

Each lateral disk 4 is annular, is made of metal, is located about annular body 2, and is elastically deformable in directions D1 and D2 parallel to axis of rotation A. Each lateral disk 4 has an inside diameter enabling lateral disk 4 to be fitted onto annular body 2 at circumferential grooves 10; and an outside diameter larger than the outside diameter of supporting ring 3.

In the example shown, each lateral disk 4 comprises an inner portion 19, an outer portion 20, and an intermediate portion 21. Each lateral disk 4 is convex in section, with its convexity facing supporting ring 3, and intermediate portion 21 is much thinner than inner portion 19 and outer portion 21.

This, together with the type of metal from which lateral disks 4 are made, results in the elastic deformation parallel to axis of rotation A being substantially concentrated in intermediate portion 21.

Each lateral disk 4 is fitted to annular body 2, and is fixed between an elastic lock ring 5 and supporting ring 3. Elastic lock rings 5 are housed partly inside respective circumferential grooves 10, and prevent withdrawal of lateral disks 4 from annular body 2.

In other words, at assembly, lateral disks 4 are precompressed on opposite sides against supporting ring 3, and are locked on opposite sides by elastic lock rings 5.

Inner portion 19 of each lateral disk 4 has a face 22 sloping with respect to axis of rotation A and having a groove 23 partly engaged by one of elastic lock rings 5.

Outer portion 20 of each lateral disk 4 has a face 24 opposite face 22 and contacting supporting ring 3. In the example shown, each lateral disk 4 and supporting ring 3 contact each other along respective faces 24 and 18.

In other words, each lateral disk 4 contacts elastic ring 5 along inner portion 19, and supporting ring 3 along outer portion 20, and along opposite faces of lateral disk 4.

In actual use, when the cable subjects supporting ring 3 to a force parallel to axis of rotation A, supporting ring 3 pushes the outer portion 20 of one of lateral disks 4 in direction D1, and produces an equal opposite reaction at inner portion 19, at the contact point between elastic lock ring 5 and lateral disk 4. These two forces produce a bending moment which deforms intermediate portion 21 elastically and moves outer portion 20 with respect to inner portion 19 in direction D1.

Because both lateral disks 4 are mounted with a given precompression, the outer portion 20 of the opposite lateral disk 4 follows the movement of supporting ring 3 and takes up any slack that would theoretically be formed between supporting ring 3 and lateral disk 4.

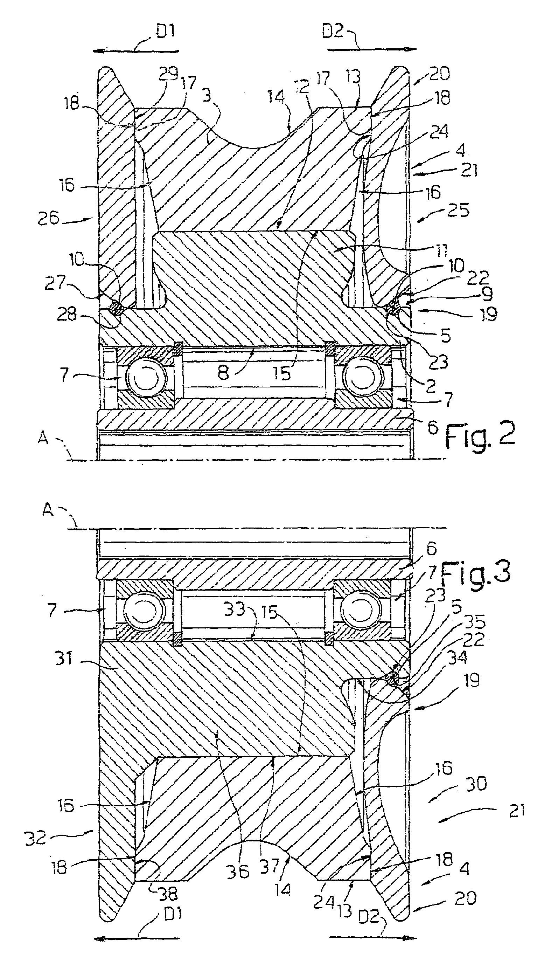

Number 25 in the Figure 2 variation indicates as a whole a cable roller of a transportation system not shown in the attached drawings.

Roller 25 is identical to roller 1, except that one elastic lateral disk 4 is replaced by a rigid lateral disk 26, which, like lateral disk 4, is fitted about annular body 2 and locked axially by an elastic lock ring 5.

Except for lateral disk 26, the other component parts of roller 25 are indicated using the same reference numbers as for roller 1.

Annular lateral disk 26 is made of metal, and has a face 27 sloping with respect to axis of rotation A and having a groove 28 partly engaged by one of elastic lock rings 5.

The outer portion 20 of lateral disk 26 has a face 29 opposite face 27 and in contact with supporting ring 3. In the example shown, lateral disk 26 and supporting ring 3 contact each other along respective faces 29 and 18.

Number 30 in the Figure 3 variation indicates as a whole a cable roller of a transportation system not shown in the attached drawings.

Roller 30 is identical to roller 25, except that rigid lateral disk 26 and annular body 2 are replaced by an annular body 31, from which a rigid lateral disk 32, with the same function as rigid lateral disk 26, extends in one piece.

Annular body 31 has an inner surface 33; an outer surface 34, along which a lateral circumferential groove 35 is formed; and an annular projection 36 located between lateral disk 32 and circumferential groove 35, and having a cylindrical face 37.

Lateral disk 32 has a face 38 facing supporting ring 3 and which is positioned contacting face 18 of supporting ring 3.

## Claims

1. A cable roller (1; 25; 30) of a cable transportation system comprises an annular body (2; 31), which rotates about an axis of rotation (A) and has a central hole, and an outer surface (9) having at least one circumferential groove (10); a cable supporting ring (3) made of hard, substantially elastically undeformable material and fitted to the annular body (2) to slide in directions (D1, D2) parallel to the axis of rotation (A); two lateral disks (4; 4, 26; 4, 32) located about the annular body (2) to lock the supporting ring (3) axially; and at least one elastic lock ring (5) housed in the circumferential groove (10) and contacting a lateral disk (4; 4, 26) to prevent axial movement of the lateral disk (4; 4, 26) with respect to the annular body (2); the roller (1) being **characterized in that** at least one of the lateral disks (4; 4, 26; 4, 32) comprises an inner portion (19); an outer portion (20); and an intermediate portion (21) elastically deformable in said directions (D1, D2) to permit relative movement between the outer portion (20) and the inner portion (19).

2. A roller as claimed in Claim 1, **characterized in that** the intermediate portion (21) of the elastically deformable lateral disk (4) is of a thickness smaller than the thickness of the inner portion (19) and outer portion (20); said thicknesses being measured parallel to said directions (D1, D2).

3. A roller as claimed in Claim 1 or 2, **characterized in that** the inner portion (19) of the elastically deformable lateral disk (4) is positioned contacting the elastic lock ring (5), and the outer portion (20) of the elastically deformable lateral disk (4) is positioned contacting the supporting ring (3).

4. A roller as claimed in Claim 3, **characterized in that** the inner portion (19) of the elastically deformable lateral disk (4) comprises a first face (22), in which is formed a groove (23) housing the elastic lock ring (5).

5. A roller as claimed in Claim 4, **characterized in that** the outer portion (20) comprises a second face (24) positioned contacting the supporting ring (3).

6. A roller as claimed in Claim 5, **characterized in that** the second face (24) is opposite the first face (22).

7. A roller as claimed in any one of the foregoing Claims, **characterized in that** the elastically deformable lateral disk (4) has a convex cross section with its convexity facing the supporting ring (3).

8. A roller as claimed in any one of the foregoing Claims, **characterized in that** the supporting ring (3) has an outer face (13); an inner face (15); and two lateral projections (17), each positioned contacting a respective lateral disk (4; 4, 26; 4, 32).

9. A roller as claimed in Claim 8, **characterized in that** the supporting ring 3) has two lateral faces (16) converging towards the axis of rotation (A).

10. A roller as claimed in any one of the foregoing Claims, **characterized in that** the annular body (2; 31) has an annular projection (11; 36) comprising a cylindrical face (12; 37); the supporting ring (3) being fitted to the annular body (2; 31) along said cylindrical face (12; 37).

11. A roller as claimed in any one of the foregoing Claims, **characterized by** comprising two elastically deformable disks (4) located on opposite sides of the supporting ring (3).

12. A roller as claimed in any one of Claims 1 to 10, **characterized by** comprising a rigid lateral disk (26; 32); said supporting ring (3) being located between the elastically deformable lateral disk (4) and the rigid lateral disk (26; 32).

13. A roller as claimed in Claim 12, **characterized in that** the rigid lateral disk (26) is fixed to the annular body (2) by means of an elastic lock ring (5).

14. A roller as claimed in Claim 12, **characterized in that** the rigid lateral disk (32) forms an integral part of the annular body (31).

15. A roller as claimed in any one of Claims 1 to 14, **characterized in that** each elastically deformable lateral disk (4) is made of metal.

## Patentansprüche

1. Kabelrolle (1; 25; 30) eines Seilbahn- bzw. Kabeltransportsystems, die umfasst: einen ringförmigen Körper (2; 31), der sich um eine Drehachse (A) dreht und ein Mittelloch und eine Außenoberfläche (9) mit wenigstens einer Umfangsrille (10) hat; einen Kabelhaltering (3), der aus hartem, im Wesentlichen elastisch unverformbaren Material gefertigt ist und auf den ringförmigen Körper (2) aufgesetzt ist, um sich in Richtungen (D1, D2) parallel zu der Drehachse (A) zu drehen; zwei seitliche Scheiben (4; 4, 26; 4, 32), die sich um den ringförmigen Körper (2) herum befinden, um den Haltering (3) axial zu verriegeln; und wenigstens einen elastischen Verriegelungsring (5), der in der Umfangsrille (10) untergebracht ist und eine seitliche Scheibe (4; 4, 26) berührt, um die axiale Bewegung der seitlichen Scheibe (4; 4, 26) in Bezug auf den ringförmigen Körper (2) zu verhindern; wobei die Rolle (1) **dadurch gekennzeichnet ist, dass** wenigstens eine der seitlichen Scheiben (4; 4, 26; 4, 32) einen inneren Abschnitt (19), einen äußeren Abschnitt (20) und einen Zwischenabschnitt (21) aufweist, der in die Richtungen (D1, D2) elastisch verformbar ist, um die Relativbewegung zwischen dem äußeren Abschnitt (20) und dem inneren Abschnitt (19) zuzulassen.

2. Rolle nach Anspruch 1, **dadurch gekennzeichnet, dass** der Zwischenabschnitt (21) der elastisch verformbaren seitlichen Scheibe (4) eine kleinere Dicke hat als die Dicke des inneren Abschnitts (19) und des äußeren Abschnitts (20); wobei die Dicke parallel zu den Richtungen (D1, D2) gemessen wird.

3. Rolle nach Anspruch 1 oder 2, **dadurch gekennzeichnet, dass** der innere Abschnitt (19) der elastisch verformbaren seitlichen Scheibe (4) so positioniert ist, dass er den elastischen Verriegelungsring (5) berührt, und der äußere Abschnitt (20) der elastisch verformbaren seitlichen Scheibe (4) so positioniert ist, dass er den Haltering (3) berührt.

4. Rolle nach Anspruch 3, **dadurch gekennzeichnet, dass** der innere Abschnitt (19) der elastisch verformbaren seitlichen Scheibe (4) eine erste Seite (22) umfasst, in der eine Rille (23) ausgebildet ist, die den elastischen Verriegelungsring (5) aufnimmt.

5. Rolle nach Anspruch 4, **dadurch gekennzeichnet, dass** der äußere Abschnitt (20) einen zweite Seite (24) umfasst, die so positioniert ist, dass sie den Haltering (3) berührt.

6. Rolle nach Anspruch 5, **dadurch gekennzeichnet, dass** die zweite Seite (24) entgegengesetzt zu der ersten Seite (22) ist.

7. Rolle nach einem der vorhergehenden Ansprüche, **dadurch gekennzeichnet, dass** die elastisch verformbare seitliche Scheibe (4) einen konvexen Querschnitt hat, wobei ihre Konvexität dem Haltering (3) zugewandt ist.

8. Rolle nach einem der vorhergehenden Ansprüche, **dadurch gekennzeichnet, dass** der Haltering (3) eine Außenseite (13), eine Innenseite (15) und zwei seitliche Vorsprünge (17) hat, von denen jeder so positioniert ist, dass er eine jeweilige seitliche Scheibe (4; 4, 26, 4, 32) berührt.

9. Rolle nach Anspruch 8, **dadurch gekennzeichnet, dass** der Haltering (3) zwei seitliche Seiten (16) hat, die in Richtung der Drehachse (A) konvergieren.

10. Rolle nach einem der vorhergehenden Ansprüche, **dadurch gekennzeichnet, dass** der ringförmige Körper (2; 31) einen ringförmigen Vorsprung (11; 36) hat, der eine zylindrische Seite (12; 37) hat, wobei der Haltering (3) entlang der zylindrischen Seite (12; 37) auf den ringförmigen Körper (2; 31) aufgesetzt ist.

11. Rolle nach einem der vorangehenden Ansprüche, **dadurch gekennzeichnet, dass** sie zwei elastisch verformbaren Scheiben (4) umfasst, die auf entgegengesetzten Seiten des Halterings (3) angeordnet sind.

12. Rolle nach einem der Ansprüche 1 bis 10, **dadurch gekennzeichnet, dass** sie eine steife seitliche Scheibe (26; 32) umfasst, wobei der Haltering (3) zwischen der elastisch verformbaren seitlichen Scheibe (4) und der steifen seitlichen Scheibe (26; 32) angeordnet ist.

13. Rolle nach Anspruch 12, **dadurch gekennzeichnet, dass** die steife seitliche Scheibe (26) mittels eines elastischen Klemmrings (5) an dem ringförmigen Körper (2) befestigt ist.

14. Rolle nach Anspruch 12, **dadurch gekennzeichnet, dass** die steife seitliche Scheibe (32) einen integralen Teil des ringförmigen Körpers (31) bildet.

15. Rolle nach einem der Ansprüche 1 bis 14, **dadurch gekennzeichnet, dass** jede elastisch verformbare Scheibe (4) aus Metall gefertigt ist.

## Revendications

1. Poulie de câble (1 ; 25 ; 30) d'un système de transport par câble, ladite poulie comprenant un corps annulaire (2 ; 31), qui tourne autour d'un axe de rotation (A) et qui possède un trou central, et une surface extérieure (9) comportant au moins une gorge circonférentielle (10) ; une bague de support de câble (3) fabriquée en matériau dur sensiblement indéformable élastiquement et rapportée au corps annulaire (2) pour coulisser dans des directions (D1, D2) parallèles à l'axe de rotation (A) ; deux disques latéraux (4 ; 4, 26 ; 4, 32) placés autour du corps annulaire (2) pour immobiliser la bague de support (3) axialement ; et au moins une bague d'immobilisation élastique (5) logée dans la gorge circonférentielle (10) et en contact avec un disque latéral (4 ; 4, 26) pour empêcher un mouvement axial du disque latéral (4 ; 4, 26) par rapport au corps annulaire (2) ; la poulie (1) étant **caractérisée en ce que** l'un des disques latéraux (4 ; 4, 26 ; 4, 32) comprend une portion intérieure (19) ; une portion extérieure (20) ; et une portion intermédiaire (21) déformable élastiquement dans lesdites directions (D1, D2) pour permettre un mouvement relatif entre la portion extérieure (20) et la portion intérieure (19).

2. Poulie selon la revendication 1, **caractérisé en ce que** la portion intermédiaire (21) du disque déformable élastiquement (4) est d'une épaisseur inférieure à l'épaisseur de la portion intérieure (19) et de la portion extérieure (20) ; ladite épaisseur étant mesurée parallèlement auxdites directions (D1, D2).

3. Poulie selon la revendication 1 ou 2, **caractérisé en ce que** la portion intérieure (19) du disque latéral déformable élastiquement (4) est positionnée au contact de la bague d'immobilisation élastique (5), et la portion extérieure (20) du disque latéral déformable élastiquement (4) est positionnée au contact de la bague de support (3).

4. Poulie selon la revendication 3, **caractérisé en ce que** la portion intérieure (19) du disque latéral déformable élastiquement (4) comprend une première face (22) dans laquelle est ménagée une gorge (23) logeant la bague d'immobilisation élastique (5).

5. Poulie selon la revendication 4, **caractérisé en ce que** la portion extérieure (20) comprend une deuxième face (24) positionnée au contact de la bague de support (3).

6. Poulie selon la revendication 5, **caractérisé en ce que** la deuxième face (24) est opposée à la première face (22).

7. Poulie selon l'une quelconque des revendications précédentes, **caractérisé en ce que** le disque latéral déformable élastiquement (4) a une section convexe dont la convexité est dirigée vers la bague de support (3).

8. Poulie selon l'une quelconque des revendications précédentes, **caractérisé en ce que** la bague de support (3) possède une face extérieure (13) ; une face intérieure (15) ; et deux projections latérales (17), chacune étant positionnée au contact d'un disque latéral respectif (4 ; 4, 26 ; 4, 32).

9. Poulie selon la revendication 8, **caractérisé en ce que** la bague de support (3) possède deux faces latérales (16) convergeant vers l'axe de rotation (A).

10. Poulie selon l'une quelconque des revendications précédentes, **caractérisé en ce que** le corps annulaire (2 ; 31) possède une projection annulaire (11 ; 36) comprenant une face cylindrique (12 ; 37) ; la bague de support (3) étant rapportée au corps annulaire (2 ; 31) le long de ladite face cylindrique (12 ; 37).

11. Poulie selon l'une quelconque des revendications précédentes, **caractérisé en ce qu'**elle comprend deux disques déformables élastiquement (4) placés sur des côtés opposés de la bague de support (3).

12. Poulie selon l'une quelconque des revendications 1 à 10, **caractérisé en ce qu'**elle comprend un disque latéral rigide (26 ; 32) ; ladite bague de support (3) étant placée entre le disque latéral déformable élastiquement (4) et le disque latéral rigide (26 ; 32).

13. Poulie selon la revendication 12, **caractérisé en ce que** le disque latéral rigide (26) est fixé au corps annulaire (2) au moyen d'une bague d'immobilisation élastique (5).

14. Poulie selon la revendication 12, **caractérisée en ce que** le disque latéral rigide (32) forme une partie intégrante du corps annulaire (31).

15. Poulie selon l'une quelconque des revendications 1 à 14, **caractérisé en ce que** chaque disque latéral déformable élastiquement (4) est fabriqués en métal.
